# EUROPÄISCHE PATENTSCHRIFT

(11) **EP 4 003 095 B1**
(45) Veröffentlichungstag und Bekanntmachung des Hinweises auf die Patenterteilung: **15.11.2023**
(21) Anmeldenummer: 20739242.4
(22) Anmeldetag: 29.06.2020
(51) Int. Cl.: A47B 88/493, F16C 29/04

(54) **SCHUBLADENAUSZIEHFÜHRUNG**
DRAWER PULL-OUT GUIDE
GUIDE D'EXTRACTION DE TIROIR

(30) Priorität: 25.07.2019 AT 506772019
(43) Veröffentlichungstag der Anmeldung: 01.06.2022
(73) Patentinhaber: Julius Blum GmbH, 6973 Höchst (AT)
(72) Erfinder: BERCHTOLD, Pascal, 6861 Alberschwende (AT); BOCH, Daniel, 88145 Opfenbach (DE); JÄGER, Matthias, 6850 Dornbirn (AT); SCHÜTZ, Stephanie, 6900 Bregenz (AT); PETERMAIR, Manuel, 6900 Bregenz (AT)
(74) Vertreter: Torggler & Hofmann Patentanwälte - Innsbruck
(86) Internationale Anmeldenummer: PCT/AT2020/060256
(87) Internationale Veröffentlichungsnummer: WO 2021/011974

(56) Entgegenhaltungen:
- WO-A1-2015/052047
- WO-A1-2018/032024
- AT-U1- 12 118
- DE-A1- 19 755 725
- DE-A1-102017 119 909

## Beschreibung

Die vorliegende Erfindung bezieht sich auf eine Schubladenausziehführung mit einem Laufwagen, mit einem Grundkörper und mehreren im oder am Grundkörper angeordneten lastübertragenden Wälzkörpern, welche um eine in eine erste Richtung orientierte Drehachse drehbar am Grundkörper gelagert sind, und mit einer ersten Rolle und wenigstens einer zweiten Rolle, welche um eine in eine zweite Richtung orientierte Drehachse drehbar am Grundkörper gelagert sind, wobei die in die zweite Richtung orientierte Drehachse quer zu der in der ersten Richtung orientierten Drehachse verläuft.

Im Weiteren betrifft die Erfindung eine Anordnung mit einer ersten Schubladenausziehführung und mit einer zweiten Schubladenausziehführung der zu beschreibenden Art, wobei die erste Schubladenausziehführung an einer ersten Seite einer Schublade und die zweite Schubladenausziehführung nach einer zweiten Seite der Schublade anordenbar ist.

Schließlich betrifft die Erfindung eine Schublade mit wenigstens einer solchen Schubladenausziehführung oder mit einer Anordnung der vorstehend genannten Art.

Ein gattungsgemäßer Laufwagen ist beispielsweise in Fig. 3 der WO 2017/106889 A1 gezeigt. Der Laufwagen 24 weist Wälzkörper 25, 26, 27 auf, wobei die lastübertragenden Wälzkörper 26 um eine horizontal verlaufende Drehachse und die Wälzkörper 26, 27 in Form von Rollen um eine vertikal verlaufende Drehachse drehbar sind.

In der WO2015052047 A1 ist eine Ausziehführung für Schubladen gezeigt, wobei die zylindrischen Wälzkörper auf der oberen Laufbahn und die auf der unteren Laufbahn laufenden zylindrischen Wälzkörper unterschiedlich Durchmesser aufweisen.

Bei Schubladenausziehführungen können sich Fehlstellungen des Laufwagens ergeben, welche zu einem Offenstehen der Schublade im normalen Gebrauch führen. Als Laufwagenfehler wird eine Fehlstellung des Laufwagens bezeichnet, welche sich über eine Öffnungsbewegung oder über eine Schließbewegung aufbaut und welche durch die aufgebaute Differenz zur korrekten Ausgangslage bestimmt ist. Ein Laufwagenfehler kann sich insbesondere durch Schlupf oder aufgrund von Elastizität im Rollen- bzw. Laufsystem während des Bewegungsablaufes der Schubladenausziehführung ergeben. Ab einer bestimmten Anzahl von Bewegungen kann sich der Laufwagen schließlich so weit von seiner Sollposition entfernen, dass dieser auf einen Endanschlag im Schienensystem auftrifft, bevor die Schublade überhaupt die vollständig geschlossene und/oder die vollständig geöffnete Endlage relativ zum Möbelkorpus erreicht hat.

Die Rollen des Laufwagens werden üblicherweise mit einem geringen Spiel zu den seitlichen Laufstegen der Führungsschienen der Schubladenausziehführung geführt. Auf diese Weise sind Fertigungstoleranzen der Führungsschienen ausgleichbar, wodurch eine Verklemmung der Rollen mit den seitlichen Laufstegen der Führungsschienen verhindert wird. Das vorhandene Spiel zwischen den Rollen des Laufwagens und den zugeordneten Laufstegen der Führungsschienen macht sich - bei einer schwer beladenen Schublade - in Bezug auf einen Laufwagenfehler kaum bemerkbar, weil die Rollen des Laufwagens durch die Beladung der Schublade gegen die Führungsschienen gedrückt werden. Durch den Kontakt zwischen den Rollen und den Führungsschienen wird auch der Laufwagen mitbewegt, sodass entweder kein oder nur ein geringer Laufwagenfehler vorliegt.

Wenn allerdings die Schublade nicht oder nur gering belastet wird, so ist es möglich, dass die Rollen von den zugeordneten Laufstegen der Führungsschienen zumindest zeitweise beabstandet sind. Durch den fehlenden Kontakt zwischen den Rollen des Laufwagens und den Führungsschienen der Schubladenausziehführung wird der Laufwagen bei einer Bewegung der Schubladenausziehführung nicht weiterbewegt, wodurch der Laufwagen von seiner Sollposition abweicht. Wenn die Schublade mehrmals hintereinander nur zur Hälfte oder nur zu zwei Drittel geöffnet wird, so steht der Laufwagen an einem Endanschlag der Schubladenausziehführung an, bevor die Schublade vollständig geöffnet ist. Um die Schublade vollständig zu öffnen, muss die ausziehbare Führungsschiene durch eine manuelle Zugbewegung über den Laufwagen hinweg gezogen werden, was zu einer erhöhten Reibung und zu erhöhten Öffnungskräften der Schubladenausziehführung führt.

Aufgabe der vorliegenden Erfindung ist es, einen Laufwagen der eingangs erwähnten Gattung unter Vermeidung der oben diskutierten Nachteile anzugeben.

Dies wird erfindungsgemäß durch die Merkmale des Patentanspruchs 1 gelöst. Weitere vorteilhafte Ausführungsbeispiele der Erfindung sind in den abhängigen Ansprüchen angegeben.

Gemäß der Erfindung ist vorgesehen, dass die erste Rolle einen größeren Durchmesser als die zweite Rolle aufweist.

Als "lastübertragende Wälzkörper" im Sinne der gegenständlichen Erfindung werden jene Wälzkörper bezeichnet, welche de facto eine Gewichtskraft der Schublade aufnehmen und bei einem bestimmungsgemäßen Einbau der Schubladenausziehführung vorzugsweise um eine horizontal verlaufende Drehachse rotierbar sind.

Als "Rollen" im Sinne der gegenständlichen Erfindung werden hingegen jene Rollen des Laufwagens bezeichnet, deren Drehachsen bei einem bestimmungsgemäßen Einbau der Schubladenausziehführung von einer horizontalen Lage abweichen. Vorzugsweise ist vorgesehen, dass die Rollen des Laufwagens um eine vertikal verlaufende Drehachse rotierbar sind.

Mit anderen Worten weist zumindest eine erste Rolle des Laufwagens, deren Drehachse bei einem bestimmungsgemäßen Einbau der Schubladenausziehführung von einer horizontalen Lage abweicht, einen größeren Durchmesser als eine zweite Rolle des Laufwagens auf. Die erste Rolle mit dem größeren Durchmesser liegt in einem montierten Zustand des Laufwagens an zumindest einem Laufsteg der Schubladenausziehführung spielfrei an, wodurch der Laufwagen bei einer Relativbewegung der Schubladenausziehführung stets an eine Bewegung einer ausziehbaren Führungsschiene koppelbar ist. Auf diese Weise ist die erste Rolle des Laufwagens ständig spielfrei an einem Laufsteg einer ausziehbaren Führungsschiene anlegbar, wodurch der Laufwagen stets eine korrekte Position in Bezug zu den Führungsschienen der Schubladenausziehführung einnimmt.

Erfindungsgemäß ist vorgesehen, dass der Laufwagen genau eine erste Rolle mit größerem Durchmesser aufweist. Auf diese Weise kann der Reibungswiderstand der Schubladenausziehführung auf einem geringen Niveau gehalten werden.

Zumindest eine zweite Rolle des Laufwagens weist gegenüber der ersten Rolle des Laufwagens einen geringeren Durchmesser auf, wobei die zweite Rolle bei einer Relativbewegung der Schubladenausziehführung mit einem Abstand zum Laufsteg der Schubladenausziehführung geführt ist. Selbstverständlich kann der Laufwagen auch zwei oder mehrere zweite Rollen aufweisen, welche in Bezug zur ersten Rolle einen geringeren Durchmesser aufweisen.

Vorzugsweise ist vorgesehen, dass die in die erste Richtung orientierte Drehachse in einer Montagelage des Laufwagens im Wesentlichen horizontal verläuft und/oder dass die in die zweite Richtung orientierte Drehachse in der Montagelage des Laufwagens im Wesentlichen vertikal verläuft.

Gemäß einem Ausführungsbeispiel kann vorgesehen sein, dass die erste Rolle und die zweite Rolle aus einem unterschiedlichen Material hergestellt sind. Dabei kann vorgesehen sein, dass die erste Rolle aus einem Kunststoffmaterial und die zweite Rolle aus Metall besteht. Alternativ ist es möglich, dass die wenigstens zwei Rollen des Laufwagens aus unterschiedlichen Kunststofftypen bestehen.

Die erste Rolle, welche in Bezug auf die zweite Rolle einen größeren Durchmesser aufweist, kann aus einem weicheren, insbesondere elastischen, Material als die zweite Rolle gebildet sein.

Gemäß einem Ausführungsbeispiel kann vorgesehen sein, dass die erste Rolle als Zweikomponentenrolle ausgebildet ist. Die Zweikomponentenrolle kann einen innen liegenden Kern und einen vom Kern gesonderten äußeren Mantel aufweisen, wobei vorzugsweise vorgesehen ist, dass der Mantel und der Kern aus einem unterschiedlichen Material oder aus unterschiedlichen Kunststofftypen gebildet sind. Die erste Rolle und die zweite Rolle können einen unterschiedlichen Elastizitätsmodul und/oder einen unterschiedlichen Reibungskoeffizienten aufweisen.

Gemäß einem Ausführungsbeispiel sind die zumindest zwei Rollen des Laufwagens jeweils rotationssymmetrisch ausgebildet, wobei die erste Rolle und die zweite Rolle - abgesehen von der unterschiedlichen Ausbildung des Durchmessers - eine gleiche oder auch eine unterschiedliche Geometrie aufweisen können.

Zumindest eine Rolle des Laufwagens, vorzugsweise die erste Rolle, kann ein elastisches Material, vorzugsweise Silikonmaterial, aufweisen. Durch die elastischen Eigenschaften der ersten Rolle kann diese mit einer ausreichenden Haltekraft an zumindest einem Laufsteg einer ausziehbaren Führungsschiene spielfrei anliegen und eine Bewegung der Führungsschiene auf den Laufwagen übertragen.

Gemäß einem Ausführungsbeispiel kann vorgesehen sein, dass die Wälzkörper und/oder die erste Rolle und/oder die zweite Rolle eine zylindrische Form aufweisen. Die Ausbildung von zylindrischen Wälzkörpern und Rollen hat den Vorteil, dass diese mit einem Linienkontakt an den Führungsschienen der Schubladenausziehführung anliegen, wodurch einerseits die Tragfähigkeit der Schubladenausziehführung erhöht und andererseits die seitliche Stabilität des Laufwagens und der Führungsschienen zueinander verbessert wird.

Gemäß einem Ausführungsbeispiel kann vorgesehen sein, dass die erste Rolle einen Durchmesser zwischen 3 mm und 5mm und/oder dass die zweite Rolle einen Durchmesser zwischen 2 mm und 4 mm aufweist.

Weitere Einzelheiten und Vorteile der vorliegenden Erfindung ergeben sich aus der nachfolgenden Figurenbeschreibung.
- Fig. 1a, 1b: zeigen perspektivische Ansichten eines Möbels mit einer Schublade und einer Schubladenausziehführung zur verschiebbaren Lagerung der Schublade,
- Fig. 2a, 2b: zeigen die Schubladenausziehführung in zwei verschiedenen Vertikalschnitten,
- Fig. 3a, 3b: zeigen eine perspektivische Ansicht eines Laufwagens sowie eine vergrößerte Detaildarstellung hierzu,
- Fig. 4a, 4b: zeigen die Schubladenausziehführung in einem Querschnitt sowie eine vergrößerte Detaildarstellung hierzu.

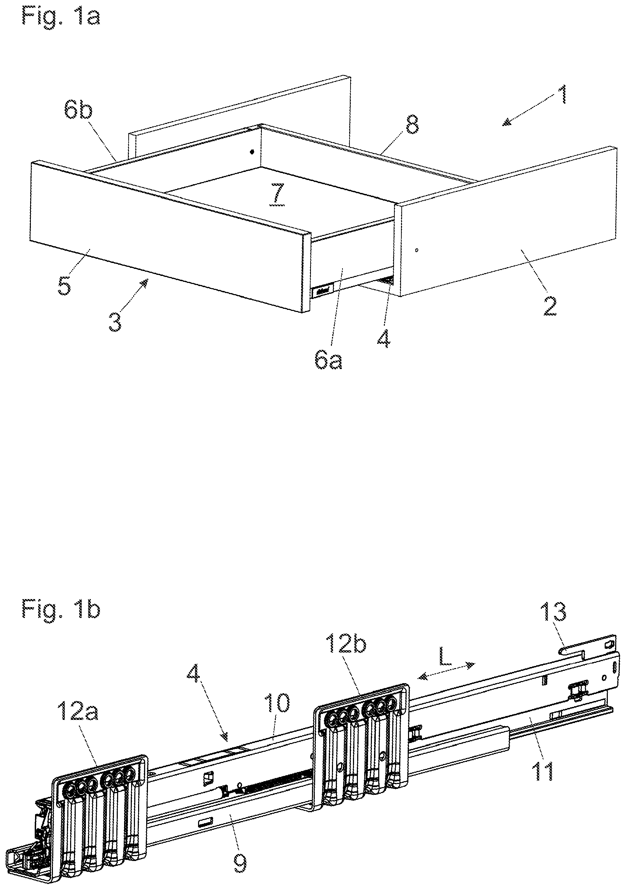

Fig. 1a zeigt eine perspektivische Ansicht eines Möbels 1 mit einem Möbelkorpus 2 und einer relativ zum Möbelkorpus 2 verschiebbaren Schublade 3. Die Schublade 3 ist über Schubladenausziehführungen 4 relativ zum Möbelkorpus 2 verschiebbar gelagert und weist eine Frontblende 5, Seitenwände 6a, 6b in Form von Hohlkammerprofilen, einen Schubladenboden 7 und eine Rückwand 8 auf.

Fig. 1b zeigt eine Schubladenausziehführung 4 in einer perspektivischen Ansicht. Die Schubladenausziehführung 4 weist eine erste Führungsschiene 9 auf, welche über einen vorderen Befestigungsabschnitt 12a und über einen hinteren Befestigungsabschnitt 12b am Möbelkorpus 2 zu befestigen ist. Darüber hinaus weist die Schubladenausziehführung 4 weitere Führungsschienen 10, 11 auf, welche relativ zur ersten Führungsschiene 9 verschiebbar gelagert sind. Eine zweite Führungsschiene 10 der Schubladenausziehführung 4 ist mit der Schublade 3 verbunden oder lösbar verbindbar. Zur Realisierung eines Vollauszuges der Schublade 3 relativ zum Möbelkorpus 2 kann optional eine dritte Führungsschiene 11 vorgesehen sein, welche zwischen der ersten Führungsschiene 9 und der zweiten Führungsschiene 10 verschiebbar gelagert ist. Am hinteren Ende der zweiten Führungsschiene 10 ist ein Haken 13 angeordnet, welcher von einer Oberseite der zweiten Führungsschiene 10 beabstandet ist und sich in Längsrichtung (L) der Schubladenausziehführung 4 erstreckt. Der Haken 13 greift in einem montierten Zustand der Schublade 3 an der Schubladenausziehführung 4 in eine korrespondierende Öffnung der Schublade 3 ein, wodurch der hintere Endbereich der Schublade 3 in einer Richtung quer zur Längsrichtung (L) stabilisierbar ist.

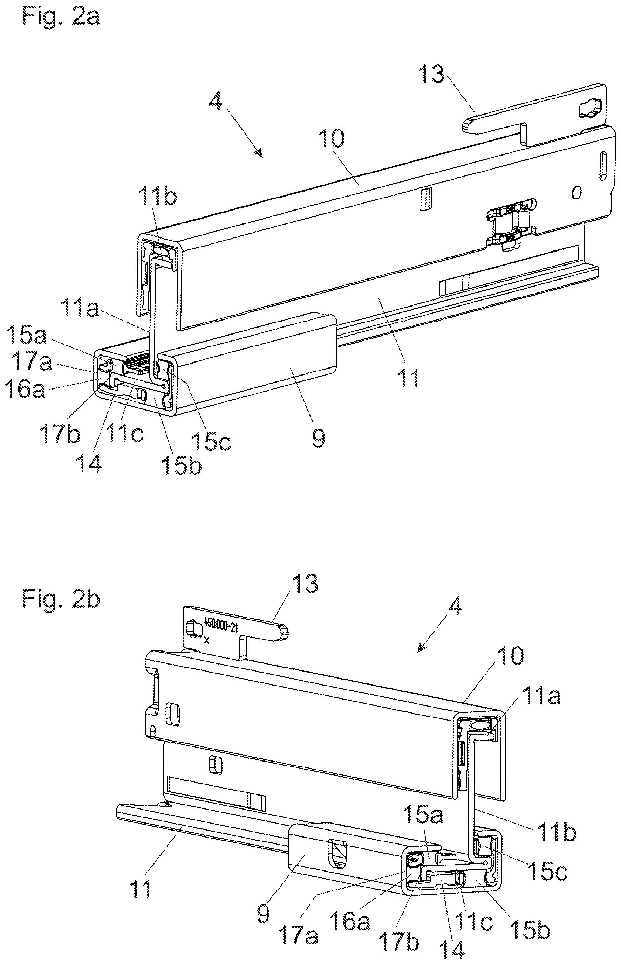

Fig. 2a zeigt die Schubladenausziehführung 4 in einem ersten Vertikalschnitt. Die Schubladenausziehführung 4 weist die am Möbelkorpus 2 zu befestigende erste Führungsschiene 9, die an der Schublade 3 zu befestigende zweite Führungsschiene 10 und die dritte Führungsschiene 11 auf, welche zwischen der ersten Führungsschiene 9 und der zweiten Führungsschiene 10 verschiebbar gelagert ist. Die erste Führungsschiene 9 kann gemäß einem Ausführungsbeispiel einen C-förmigen Querschnitt aufweisen. Die zweite Führungsschiene 10 weist in der gezeigten Figur einen U-förmigen Querschnitt auf, während die dritte Führungsschiene 11 einen, vorzugsweise vertikal verlaufenden, Seitensteg 11a und zwei in einer Höhenrichtung voneinander beabstandete, vorzugsweise horizontal verlaufende, Querstege 11b, 11c aufweist.

Zwischen der ersten Führungsschiene 9 und der dritten Führungsschiene 11 ist zumindest ein Laufwagen 14 verschiebbar gelagert. Der Laufwagen 14 weist mehrere lastübertragende Wälzkörper 15a, 15b, 15c, 15d auf, welche um eine in eine erste Richtung orientierte, vorzugsweise horizontal verlaufende, Drehachse (X) drehbar gelagert sind. Überdies weist der Laufwagen 14 zumindest zwei von den Wälzkörpern 15a, 15b, 15c, 15d gesonderte Rollen 16a, 16b auf, welche um eine in eine zweite Richtung orientierte, vorzugsweise vertikal verlaufende, Drehachse (Y) gelagert sind, wobei die zweite Richtung quer, vorzugsweise im Wesentlichen rechtwinklig, zur ersten Richtung verläuft. Die Rollen 16a, 16b des Laufwagens 14 sind entlang eines ersten Laufsteges 17a der ersten Führungsschiene 9 und entlang eines zweiten Laufsteges 17b der dritten Führungsschiene 11 bewegbar gelagert. Vorzugsweise ist vorgesehen, dass der erste Laufsteg 17a der ersten Führungsschiene 9 und der zweite Laufsteg 17b der dritten Führungsschiene 11 im Wesentlichen parallel zueinander verlaufen. Der Durchmesser der ersten Rolle 16a ist so gewählt, dass die erste Rolle 16a sowohl am ersten Laufsteg 17a der ersten Führungsschiene 9 als auch am zweiten Laufsteg 17b der dritten Führungsschiene 11 spielfrei anliegt. Auf diese Weise wird sichergestellt, dass der Laufwagen 14 bei einer Relativbewegung der Führungsschienen 9, 10, 11 zueinander ständig an eine Bewegung einer ausziehbaren Führungsschiene 10, 11 gekoppelt ist und dadurch stets eine vorgegebene Sollposition in Bezug zu den Führungsschienen 9, 10, 11 einnimmt.

Fig. 2b zeigt die Schubladenausziehführung 4 gemäß Fig. 2a in einem zweiten Vertikalschnitt.

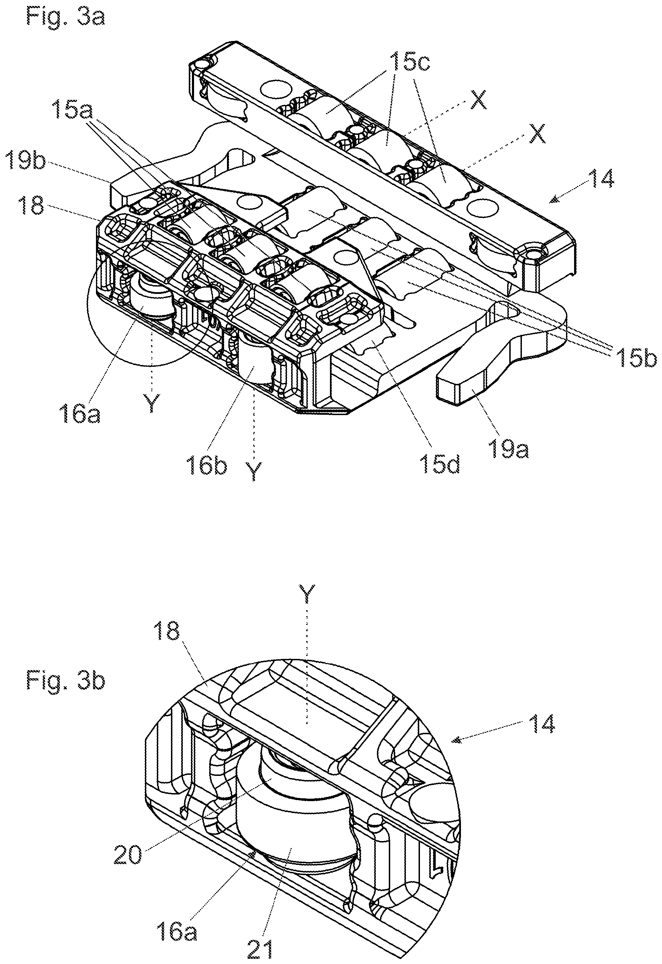

Fig. 3a zeigt ein Ausführungsbeispiel eines Laufwagens 14, welcher einen Grundkörper 18 und mehrere im oder am Grundkörper 18 gelagerte lastübertragende Wälzkörper 15a, 15b, 15c, 15d aufweist, welche um eine in einer ersten Richtung orientierten Drehachse (X) drehbar gelagert sind. In der gezeigten Figur sind jeweils mehrere Wälzkörper 15a, 15b, 15c, 15d vorgesehen, welche in einer Längsrichtung des Laufwagens 14 voneinander beabstandet sind. Die Wälzkörper 15b, 15b befinden sich in einer selben (ersten) Laufebene und sind in einer Draufsicht auf eine Ebene normal zur Längsrichtung des Laufwagens 14 seitlich versetzt zueinander angeordnet. Die Wälzkörper 15a sind in einer zweiten Laufebene und die Wälzkörper 15c sind in einer dritten Laufebene um eine horizontal verlaufende Drehachse drehbar gelagert. Die erste, zweite und dritte Laufebene können in einer Höhenrichtung voneinander beabstandet sein, wodurch die seitliche Stabilität des Laufwagens 14 erhöht wird.

An den beiden Endbereichen des Laufwagens 14 ist jeweils ein Dämpfungselement 19a, 19b, vorzugsweise in Form einer elastisch verbiegbaren Federzunge, vorgesehen. Durch die Dämpfungselemente 19a, 19b ist eine Bewegung des Laufwagens 14 dämpfbar, wenn der Laufwagen 14 auf einen vorderen und einen hinteren Endanschlag der Schubladenausziehführung 4 zur Begrenzung eines Fahrweges des Laufwagens 14 auftrifft.

Der Laufwagen 14 weist neben den lastübertragenden Wälzkörpern 15a, 15b, 15c, 15d zumindest zwei Rollen 16a, 16b auf, welche um eine in einer zweiten Richtung orientierten Drehachse (Y), vorzugsweise um eine im Wesentlichen vertikal verlaufende Drehachse (Y), drehbar gelagert sind. Die erste Rolle 16a weist einen größeren Durchmesser als die zweite Rolle 16b auf, wobei die erste Rolle 16a sowohl am Laufsteg 17a der ersten Führungsschiene 9 als auch am zweiten Laufsteg 17b der zweiten Führungsschiene 11 spielfrei anliegt. Die zweite Rolle 16b ist hingegen mit einem Spiel zum ersten Laufsteg 17a der ersten Führungsschiene 9 und/oder mit einem Spiel zum zweiten Laufsteg 17b der zweiten Führungsschiene 11 geführt.

Der in Fig. 3a gezeigte Laufwagen 14 hat den Vorteil, dass der Laufwagen 14 - ohne bauliche Modifizierung - sowohl für eine an einer ersten Seite (rechts) der Schublade 3 anzuordnenden ersten Schubladenausziehführung 4 als auch für eine an einer zweiten Seite (links) der Schublade 3 anzuordnenden zweiten Schubladenausziehführung 4 verwendbar ist, ohne dass dabei der Laufwagen 14 spiegelsymmetrisch aufgebaut werden müsste. Der Laufwagen 14 wird also bei der zweiten Schubladenausziehführung 4 einfach um 180° verdreht, wodurch die erste Rolle 16a mit größerem Durchmesser der ersten Schubladenausziehführung 4 in einem hinteren Endbereich des Laufwagens 4 und die andere erste Rolle 16a mit größerem Durchmesser der zweiten Schubladenausziehführung 4 in einem vorderen Endbereich des Laufwagens 4 angeordnet ist.

Fig. 3b zeigt den in Fig. 3a eingekreisten Bereich in einer vergrößerten Ansicht. Die erste Rolle 16a ist im gezeigten Ausführungsbeispiel als Zweikomponentenrolle ausgebildet und weist einen innen liegenden Kern 20 und einen vom Kern 20 gesonderten äußeren Mantel 21 auf. Der innere Kern 20 und der äußere Mantel 21 können aus einem unterschiedlichen Material oder aus unterschiedlichen Kunststofftypen gebildet sein. Vorzugsweise ist vorgesehen, dass die erste Rolle 16a und die zweite Rolle 16b aus einem unterschiedlichen Material hergestellt sind und/oder dass die erste Rolle 16a aus einem weicheren Material als die zweite Rolle 16b gebildet ist. Ferner kann vorgesehen sein, dass die erste Rolle 16a aus einem elastischen Material, vorzugsweise Silikonmaterial, gebildet ist, wodurch die erste Rolle 16a an den Laufstegen 17a, 17b der Führungsschienen 9, 10, 11 spielfrei anlegbar ist und damit eine korrekte Position des Laufwagens 14 in Bezug zu den Führungsschienen 9, 10, 11 festlegt.

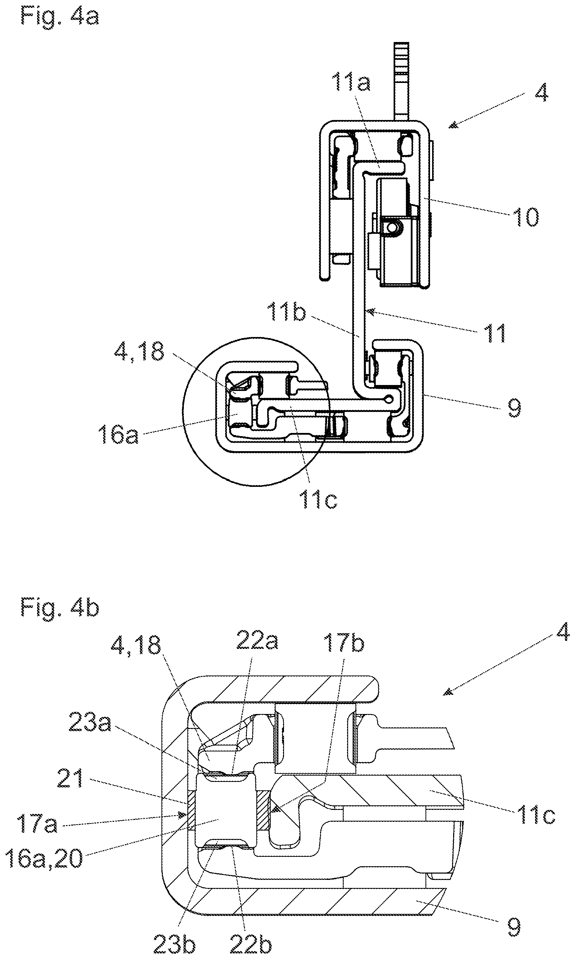

Fig. 4a zeigt die Schubladenausziehführung 4 mit den Führungsschienen 9, 10, 11 in einem Querschnitt. Zu erkennen ist, dass der untere Quersteg 11c der dritten Führungsschiene 11 zumindest bereichsweise, vorzugsweise im Wesentlichen vollständig, im C-förmigen Profil der ersten Führungsschiene 9 aufgenommen ist.

Fig. 4b zeigt den in Fig. 4a eingekreisten Bereich in einer vergrößerten Ansicht. Zu erkennen ist, dass die erste Rolle 16a des Laufwagens 14 sowohl am Laufsteg 17a der ersten Führungsschiene 9 als auch am Laufsteg 17b der dritten Führungsschiene 11 spielfrei anliegt. Im gezeigten Ausführungsbeispiel ist die erste Rolle 16a durch den Kern 20 und durch den Mantel 21 gebildet, wobei der Mantel 21 an den Laufstegen 17a, 17b spielfrei anliegt.

Die Wälzkörper 15a, 15b, 15c, 15d und/oder die Rollen 16a, 16b sind über eine Ausnehmung 23a, 23b und über zumindest einen in die Ausnehmung 23a, 23b eingreifenden Vorsprung 22a, 22b am Grundkörper 18 des Laufwagens 14 drehbar gelagert und gehalten. Vorzugsweise ist vorgesehen, dass die Ausnehmung 23a, 23b an den Wälzkörpern 15a, 15b, 15c, 15d und/oder an den Rollen 16a, 16b und der Vorsprung 22a, 22b am Grundkörper 18 des Laufwagens 14 angeordnet ist. Selbstverständlich ist es in mechanischer Umkehr auch möglich, dass die Ausnehmungen 23a, 23b am Grundkörper 18 des Laufwagens 14 und die Vorsprünge 22a, 22b an den Wälzkörpern 15a, 15b, 15c, 15d und/oder an den Rollen 16a, 16b angeordnet sind.

Anders als in den Figuren gezeigt, kann der Laufwagen 14 mit der größeren ersten Rolle 16a nicht nur zwischen der ersten Führungsschiene 9 und der dritten Führungsschiene 11, sondern auch zwischen der dritten Führungsschiene 11 und der zweiten Führungsschiene 10 verschiebbar gelagert sein.

## Patentansprüche

1. Schubladenausziehführung (4) mit einer, vorzugsweise an einem Möbelkorpus (2) zu befestigenden, ersten Führungsschiene (9), zumindest einer relativ zur ersten Führungsschiene (9) verschiebbar gelagerten weiteren Führungsschiene (10, 11), und mit zumindest einem Laufwagen (14), wobei der zumindest eine Laufwagen (14) zwischen der ersten Führungsschiene (9) und der weiteren Führungsschiene (10, 11) verschiebbar gelagert ist, wobei der Laufwagen (14) aufweist:
- einen Grundkörper (18) und mehrere im oder am Grundkörper (18) angeordnete lastübertragende Wälzkörper (15a, 15b, 15c, 15d), welche um eine in eine erste Richtung orientierte Drehachse (X) drehbar am Grundkörper (18) gelagert sind, und mit einer ersten Rolle (16a) und wenigstens einer zweiten Rolle (16b), welche um eine in eine zweite Richtung orientierte Drehachse (Y) drehbar am Grundkörper (18) gelagert sind, wobei die in die zweite Richtung orientierte Drehachse (Y) quer zu der in der ersten Richtung orientierten Drehachse (X) verläuft, wobei die erste Rolle (16a) einen größeren Durchmesser als die zweite Rolle (16b) aufweist, wobei die in die erste Richtung orientierte Drehachse (X) in einer Montagelage des Laufwagens (14) im Wesentlichen horizontal verläuft und/oder dass die in die zweite Richtung orientierte Drehachse (Y) in der Montagelage des Laufwagens (14) im Wesentlichen vertikal verläuft, wobei die erste Führungsschiene (9) zumindest einen ersten Laufsteg (17a) aufweist, entlang welchem der Laufwagen (14) verschiebbar gelagert ist,
**dadurch gekennzeichnet, dass** die erste Rolle (16a) des Laufwagens (14) einen größeren Durchmesser als die zweite Rolle (16b) des Laufwagens (14) aufweist, wobei die erste Rolle (16a) am ersten Laufsteg (17a) der ersten Führungsschiene (9) spielfrei anliegt und dass die zweite Rolle (16b) mit einem Spiel zum ersten Laufsteg (17a) der ersten Führungsschiene (9) geführt ist.

2. Schubladenausziehführung (4) nach Anspruch 1, **dadurch gekennzeichnet, dass** die erste Rolle (16a) und die zweite Rolle (16b) aus einem unterschiedlichen Material hergestellt sind.

3. Schubladenausziehführung (4) nach Anspruch 1 oder 2, **dadurch gekennzeichnet, dass** die erste Rolle (16a) aus einem weicheren Material als die zweite Rolle (16b) gebildet ist.

4. Schubladenausziehführung (4) nach einem der Ansprüche 1 bis 3, **dadurch gekennzeichnet, dass** die erste Rolle (16a) als Zweikomponentenrolle ausgebildet ist.

5. Schubladenausziehführung (4) nach einem der Ansprüche 1 bis 4, **dadurch gekennzeichnet, dass** die erste Rolle (16a) einen innen liegenden Kern (20) und einen vom Kern (20) gesonderten äußeren Mantel (21) aufweist, wobei vorzugsweise vorgesehen ist, dass der Kern (20) und der Mantel (21) aus einem unterschiedlichen Material oder aus unterschiedlichen Kunststofftypen gebildet sind.

6. Schubladenausziehführung (4) nach einem der Ansprüche 1 bis 5, **dadurch gekennzeichnet, dass** die die erste Rolle (16a) ein Silikonmaterial aufweist.

7. Schubladenausziehführung (4) nach einem der Ansprüche 1 bis 6, **dadurch gekennzeichnet, dass** die Wälzkörper (15a, 15b, 15c, 15d) und/oder die Rollen (16a, 16b) über eine Ausnehmung (23a, 23b) und über zumindest einen in die Ausnehmung (23a, 23b) eingreifenden Vorsprung (22a, 22b) am Grundkörper (18) des Laufwagens (14) drehbar gelagert und gehalten sind, wobei vorzugsweise vorgesehen ist, dass die Ausnehmung an den Wälzkörpern (15a, 15b, 15c, 15d) und/oder an den Rollen (16a, 16b) und der zumindest eine Vorsprung (22a, 22b) am Grundkörper (18) des Laufwagens (14) angeordnet ist.

8. Schubladenausziehführung (4) nach einem der Ansprüche 1 bis 7, **dadurch gekennzeichnet, dass** die Wälzkörper (15a, 15b, 15c, 15d) und/oder die erste Rolle (16a) und/oder die zweite Rolle (16b) eine zylindrische Form aufweisen.

9. Schubladenausziehführung (4) nach einem der Ansprüche 1 bis 8, **dadurch gekennzeichnet, dass** die erste Rolle (16a) sowohl am ersten Laufsteg (17a) der ersten Führungsschiene (9) als auch an einem zweiten Laufsteg (17b) der weiteren Führungsschiene (10, 11) spielfrei anliegt und/oder wobei die zweite Rolle (16b) sowohl mit einem Spiel zum ersten Laufsteg (17a) der ersten Führungsschiene (9) als auch mit einem Spiel zum zweiten Laufsteg (17b) der weiteren Führungsschiene (10, 11) geführt ist.

10. Schubladenausziehführung (4) nach Anspruch 9, **dadurch gekennzeichnet, dass** der erste Laufsteg (17a) der ersten Führungsschiene (9) und der zweite Laufsteg (17b) der weiteren Führungsschiene (10, 11) im Wesentlichen parallel zueinander verlaufen.

11. Anordnung mit einer ersten Schubladenausziehführung (4) nach einem der Ansprüche 1 bis 10 und mit einer zweiten Schubladenausziehführung (4) nach einem der Ansprüche 1 bis 10, wobei die erste Schubladenausziehführung (4) an einer ersten Seite einer Schublade (3) und die zweite Schubladenausziehführung (4) nach einer zweiten Seite der Schublade (3) anordenbar ist, wobei die erste Schubladenausziehführung (4) einen ersten Laufwagen (14) und die zweite Schubladenausziehführung (4) einen zweiten Laufwagen (14) aufweist, wobei der erste Laufwagen (14) und der zweite Laufwagen (14) jeweils wenigstens zwei Rollen (16a, 16b) mit unterschiedlichem Durchmesser aufweisen, wobei die Rolle (16a) mit größerem Durchmesser des ersten Laufwagens (14) in einem hinteren Endbereich des ersten Laufwagens (14) und die Rolle (16a) mit größerem Durchmesser des zweiten Laufwagens (14) in einem vorderen Endbereich des zweiten Laufwagens (14) angeordnet sind.

12. Schublade (3) mit wenigstens einer Schubladenausziehführung (4) nach einem der Ansprüche 1 bis 10 oder mit einer Anordnung nach Anspruch 11.

## Claims

1. A drawer pull-out guide (4) comprising a first guide rail (9), preferably configured to be fixed to a furniture carcass (2), at least one further guide rail (10, 11) displaceably supported relative to the first guide rail (9), and at least one running carriage (14), wherein the at least one running carriage (14) is displaceably supported between the first guide rail (9) and the further guide rail (10, 11), the running carriage (14) comprising:
- a base body (18) and a plurality of load-transmitting rolling bodies (15a, 15b, 15c, 15d) arranged in or one the base body (18), the load-transmitting rolling bodies (15a, 15b, 15c, 15d) being rotationally supported on the base body (18) about a rotational axis (X) orientated in a first direction, the running carriage (14) further comprising a first roller (16a) and at least one second roller (16b) rotationally supported on the base body (18) about a rotational axis (Y) orientated in a second direction, the rotational axis (Y) oriented in the second direction extending transversely to the rotational axis (X) orientated in the first direction, wherein the first roller (16a) has a larger diameter than the second roller (16b), wherein the rotational axis (X) orientated in the first direction, in a mounting position of the running carriage (14), extends substantially horizontally, and/or the rotational axis (Y) orientated in the second direction, in a mounting position of the running carriage (14), extends substantially vertically, wherein the first guide rail (9) includes at least one first running limb (17a) along which the running carriage (14) is displaceably supported,
**characterized in that** the first roller (16a) of the running carriage (14) has a larger diameter than the second roller (16b) of the running carriage (14), wherein the first roller (16a) bears without clearance against the first running limb (17a) of the first guide rail (9) and that the second roller (16b) is guided with a clearance to the first running limb (17a) of the first guide rail (9).

2. The drawer pull-out guide (4) according to claim 1, **characterized in that** the first roller (16a) and the second roller (16b) are made of a different material.

3. The drawer pull-out guide (4) according to claim 1 or 2, **characterized in that** the first roller (16a) is formed of a softer material than the second roller (16b).

4. The drawer pull-out guide (4) according to one of the claims 1 to 3, **characterized in that** the first roller (16a) is configured as a two-component roller.

5. The drawer pull-out guide (4) according to one of the claims 1 to 4, **characterized in that** the first roller (16a) includes an inner core (20) and an outer shell (21) separate from the core (20), wherein it is preferably provided that the core (20) and the shell (21) are formed of a different material or of different types of plastic.

6. The drawer pull-out guide (4) according to one of the claims 1 to 5, **characterized in that** the first roller (16a) includes silicone material.

7. The drawer pull-out guide (4) according to one of the claims 1 to 6, **characterized in that** the rolling bodies (15a, 15b, 15c, 15d) and/or the rollers (16a, 16b) are rotationally supported and held on the base body (18) of the running carriage (14) via a recess (23a, 23b) and via at least one protrusion (22a, 22b) engaging the recess (23a, 23b), wherein it is preferably provided that the recess (23a, 23b) is arranged on the rolling bodies (15a, 15b, 15c, 15d) and/or on the rollers (16a, 16b), and the at least one protrusion (22a, 22b) is arranged on the base body (18) of the running carriage (14) .

8. The drawer pull-out guide (4) according to one of the claims 1 to 7, **characterized in that** the rolling bodies (15a, 15b, 15c, 15d) and/or the first roller (16a) and/or the second roller (16b) has or have a cylindrical form.

9. The drawer pull-out guide (4) according to one of the claims 1 to 8, **characterized in that** the first roller (16a) bears without clearance against the first running limb (17a) of the first guide rail (9) as well as against a second running limb (17b) of the further guide rail (10, 11), and/or wherein the second roller (16b) is guided with a clearance to the first running limb (17a) of the first guide rail (9) as well as with a clearance to the second running limb (17b) of the further guide rail (10, 11).

10. The drawer pull-out guide (4) according to claim 9, **characterized in that** the first running limb (17a) of the first guide rail (9) and the second guide rail (17b) of the further guide rail (10, 11) extend substantially parallel to each other.

11. An arrangement comprising a first drawer pull-out guide (4) according to one of the claims 1 to 10 and a second drawer pull-out guide (4) according to one of the claims 1 to 10, wherein the first drawer pull-out guide (4) is configured to be arranged on a first side of a drawer (3) and the second drawer pull-out guide (4) is configured to be arranged on a second side of the drawer (3), wherein the first drawer pull-out guide (4) includes a first running carriage (14) and the second drawer pull-out guide (4) includes a second running carriage (14), wherein each of the first running carriage (14) and the second running carriage (14) includes at least two rollers (16a, 16b) having a different diameter, wherein the roller (16a) having the larger diameter of the first running carriage (14) is arranged in a rear-end region of the first running carriage (14), and the roller (16a) having the larger diameter of the second running carriage (14) is arranged in a front-end region of the second running carriage (14) .

12. A drawer (3) comprising at least one drawer pull-out guide (4) according to one of the claims 1 to 10 or comprising an arrangement according to claim 11.

## Revendications

1. Guide d'extraction de tiroir (4) avec un premier rail de guidage (9) à fixer de préférence à un corps de meuble (2), au moins un autre rail de guidage (10, 11) logé de manière coulissante par rapport au premier rail de guidage (9), et avec au moins un chariot (14), dans lequel l'au moins un chariot (14) est logé de manière coulissante entre le premier rail de guidage (9) et l'autre rail de guidage (10, 11), dans lequel le chariot (14) présente:
- un corps de base (18) et plusieurs corps de roulement (15a, 15b, 15c, 15d) de transmission de charge agencés dans ou au niveau du corps de base (18) qui sont logés de manière rotative autour d'un axe de rotation (X) orienté dans une première direction au niveau du corps de base (18), et avec un premier rouleau (16a) et au moins un deuxième rouleau (16b) qui sont logés de manière rotative autour d'un axe de rotation (Y) orienté dans une deuxième direction au niveau du corps de base (18), dans lequel l'axe de rotation (Y) orienté dans la deuxième direction s'étend transversalement à l'axe de rotation (X) orienté dans la première direction, dans lequel le premier rouleau (16a) présente un diamètre supérieur à celui du deuxième rouleau (16b), dans lequel l'axe de rotation (X) orienté dans la première direction s'étend sensiblement horizontalement dans une position de montage du chariot (14) et/ou que l'axe de rotation (Y) orienté dans la deuxième direction s'étend sensiblement verticalement dans la position de montage du chariot (14), dans lequel le premier rail de guidage (9) présente au moins une première passerelle (17a), le long de laquelle le chariot (14) est logé de manière coulissante,
**caractérisé en ce que** le premier rouleau (16a) du chariot (14) présente un diamètre supérieur à celui du deuxième rouleau (16b) du chariot (14), dans lequel le premier rouleau (16a) repose contre la première passerelle (17a) du premier rail de guidage (9) sans jeu et que le deuxième rouleau (16b) est guidé avec un jeu vers la première passerelle (17a) du premier rail de guidage (9).

2. Guide d'extraction de tiroir (4) selon la revendication 1, **caractérisé en ce que** le premier rouleau (16a) et le deuxième rouleau (16b) sont fabriqués en un matériau différent.

3. Guide d'extraction de tiroir (4) selon la revendication 1 ou 2, **caractérisé en ce que** le premier rouleau (16a) est formé en un matériau plus mou que celui du deuxième rouleau (16b).

4. Guide d'extraction de tiroir (4) selon l'une des revendications 1 à 3, **caractérisé en ce que** le premier rouleau (16a) est réalisé comme un rouleau à deux composants.

5. Guide d'extraction de tiroir (4) selon l'une des revendications 1 à 4, **caractérisé en ce que** le premier rouleau (16a) présente un noyau intérieur (20) et une enveloppe (21) extérieure séparée du noyau (20), dans lequel il est de préférence prévu que le noyau (20) et l'enveloppe (21) soient formés en un matériau différent ou en différents types de matière plastique.

6. Guide d'extraction de tiroir (4) selon l'une des revendications 1 à 5, **caractérisé en ce que** le premier rouleau (16a) présente un matériau de silicone.

7. Guide d'extraction de tiroir (4) selon l'une des revendications 1 à 6, **caractérisé en ce que** les corps de roulement (15a, 15b, 15c, 15d) et/ou les rouleaux (16a, 16b) sont logés et maintenus de manière rotative par le biais d'un évidement (23a, 23b) et par le biais d'au moins une saillie (22a, 22b) venant en prise dans l'évidement (23a, 23b) au niveau du corps de base (18) du chariot (14), dans lequel il est de préférence prévu que l'évidement soit prévu au niveau des corps de roulement (15a, 15b, 15c, 15d) et/ou au niveau des rouleaux (16a, 16b) et l'au moins une saillie (22a, 22b) soit agencée au niveau du corps de base (18) du chariot (14).

8. Guide d'extraction de tiroir (4) selon l'une des revendications 1 à 7, **caractérisé en ce que** les corps de roulement (15a, 15b, 15c, 15d) et/ou le premier rouleau (16a) et/ou le deuxième rouleau (16b) présentent une forme cylindrique.

9. Guide d'extraction de tiroir (4) selon l'une des revendications 1 à 8, **caractérisé en ce que** le premier rouleau (16a) repose sans jeu non seulement contre la première passerelle (17a) du premier rail de guidage (9) mais aussi contre une deuxième passerelle (17b) de l'autre rail de guidage (10, 11) et/ou dans lequel le deuxième rouleau (16b) est guidé non seulement avec un jeu vers la première passerelle (17a) du premier rail de guidage (9) mais aussi avec un jeu vers la deuxième passerelle (17b) de l'autre rail de guidage (10, 11).

10. Guide d'extraction de tiroir (4) selon la revendication 9, **caractérisé en ce que** la première passerelle (17a) du premier rail de guidage (9) et la deuxième passerelle (17b) de l'autre rail de guidage (10, 11) s'étendent sensiblement parallèlement l'une à l'autre.

11. Agencement avec un premier guide d'extraction de tiroir (4) selon l'une des revendications 1 à 10 et avec un deuxième guide d'extraction de tiroir (4) selon l'une des revendications 1 à 10, dans lequel le premier guide d'extraction de tiroir (4) peut être agencé au niveau d'un premier côté d'un tiroir (3) et le deuxième guide d'extraction de tiroir (4) après un deuxième côté du tiroir (3), dans lequel le premier guide d'extraction de tiroir (4) présente un premier chariot (14) et le deuxième guide d'extraction de tiroir (4) présente un deuxième chariot (14), dans lequel le premier chariot (14) et le deuxième chariot (14) présentent respectivement au moins deux rouleaux (16a, 16b) avec un diamètre différent, dans lequel le rouleau (16a) avec le plus grand diamètre du premier chariot (14) est agencé dans une zone d'extrémité arrière du premier chariot (14) et le rouleau (16a) avec le plus grand diamètre du deuxième chariot (14) est agencé dans une zone d'extrémité avant du deuxième chariot (14).

12. Tiroir (3) avec au moins un guide d'extraction de tiroir (4) selon l'une des revendications 1 à 10 ou avec un agencement selon la revendication 11.
